# EUROPÄISCHE PATENTSCHRIFT

(11) **EP 2 410 223 B1**
(45) Veröffentlichungstag und Bekanntmachung des Hinweises auf die Patenterteilung: **03.07.2013**
(21) Anmeldenummer: 10305803.8
(22) Anmeldetag: 21.07.2010
(51) Int. Cl.: F16L 11/08, F16L 11/16, F16L 59/153

(54) **Leitungsrohr zum Unterwasser-Transport eines Fluids**
Conduit pipe for underwater fluid transport
Conduite de transport sous-marin d'un fluide

(43) Veröffentlichungstag der Anmeldung: 25.01.2012
(73) Patentinhaber: Nexans, 75008 Paris (FR)
(72) Erfinder: Frohne, Christian, Dr.-Ing., 30657 Hannover (DE); Opstad, Ketil, 1712 Gralum (NO); Hall, Jon-Arne, 1709 Sarpsborg (NO)
(74) Vertreter: Döring, Roger

(56) Entgegenhaltungen:
- GB-A- 2 051 297
- US-A- 4 984 605
- US-A- 6 053 213

## Beschreibung

Die Erfindung bezieht sich auf ein Leitungsrohr zum Unterwasser-Transport eines Fluids, welches ein das Fluid führendes, druckfestes metallisches Innenrohr aufweist, um das zu seiner mechanischen Stabilisierung in radialer Richtung mindestens ein profilierter, metallischer Strang und zur Stabilisierung in axialer Richtung mindestens ein zugfester Strang herumgewickelt sind, wobei zwischen den einzelnen Lagen aus metallischen Elementen jeweils eine Zwischenschicht aus Isoliermaterial angebracht ist, wie bekannt aus WO-A-00/36324 oder GB 20 51 297 A.

Derartige Leitungsrohre werden beispielsweise als bewegliche Rohre zum Transport von Öl, Gas oder Wasser zwischen beweglichen und/oder feststehenden Anordnungen von Öl- oder Gasförderanlagen eingesetzt, die mit entsprechenden, im Meer aufgebauten Plattformen zusammenarbeiten. Solche Leitungsrohre müssen radiale Belastungen aushalten, die einerseits durch den Druck des Öls innen und andererseits durch den Druck des Meerwassers außen entstehen, das insbesondere in größeren Tiefen von über 1000 m auf das Leitungsrohr einwirkt. Sie müssen außerdem gegen in axialer Richtung wirkende Zugbelastungen beständig sein.

Aus der eingangs erwähnten WO-A-00/36324 geht ein armiertes Leitungsrohr mit einem als sogenannte Karkasse ausgeführten Innenrohr hervor, welche aus einem profilierten metallischen Band wendelförmig gewickelt ist, dessen Windung ineinandergreifend miteinander verhakt sind. Über der Karkasse liegt eine glatte, der Abdichtung dienende Schicht aus einem Polymer, die von zwei U-förmig profilierten, ineinander greifenden Bändern umgeben ist. Über den Bändern sind als zugfeste Elemente zwei Lagen Stahldrähte aufgewickelt, die von einem Kunststoffmantel umgeben sind. Die Karkasse kann leicht vom Öl zugesetzt werden, so daß ihre Biegbarkeit und damit die Biegbarkeit des Leitungsrohrs behindert ist. Es können sich außerdem Ablagerungen bilden, die als "Altöl" zu Verschmutzungen führen. Die für die Abdichtung angebrachte Schicht ist wegen der Eigenschaft des Polymers nicht diffusionsdicht gegen aggressive Bestandteile des zu transportierenden Fluids, welche daher die außerhalb dieser Schicht liegenden Lagen durch Korrosion schädigen können.

Der Erfindung liegt die Aufgabe zugrunde, das eingangs geschilderte Leitungsrohr so zu gestalten, daß ein störungsfreier Transport eines Fluids gewährleistet werden kann und außerdem ein wirksamer Schutz gegen Meerwasser erreicht ist.

Diese Aufgabe wird gemäß der Erfindung dadurch gelöst,
- daß das Innenrohr ein quer zu seiner Längsrichtung gewelltes Metallrohr ist,
- daß das Innenrohr zur Stabilisierung in radialer Richtung von mindestens einer ersten radialen Armierung umgeben ist, die aus einem profilierten, wendelförmig verlaufenden Profilstreifen besteht, dessen Windungen eng aneinander liegen oder ineinander greifen und miteinander verhakt sind,
- daß um die radiale Armierung herum ein quer zu seiner Längsrichtung gewelltes Metallrohr als Außenrohr angebracht ist und
- daß um das Außenrohr mindestens zwei Lagen aus zugfesten Strängen herumgewickelt sind, vorzugsweise mit entgegengesetzter Schlagrichtung.

Das Innenrohr und das Außenrohr dieses Leitungsrohrs sind quer zu ihrer Längsrichtung gewellte Metallrohre. Sie werden beispielsweise in bekannter Technik aus einem längseinlaufenden Metallband hergestellt, das zu einem Rohr mit in Längsrichtung verlaufendem Schlitz geformt wird, der anschließend verschweißt wird, so daß sich ein rundum geschlossenes Rohr ergibt. In dieses Rohr wird abschließend eine Wellung eingedrückt, die wendelförmig oder ringförmig verlaufen kann. Durch die Wellung wird das jeweilige Metallrohr gut biegbar und gleichzeitig radial höher belastbar. Innenrohr und Außenrohr können grundsätzlich aus einem beliebigen Metall bestehen, das sich im geschilderten Sinne verarbeiten läßt. Sie bestehen mit Vorteil aus Edelstahl.

Die im Aufbau des Leitungsrohrs vorhandene radiale Armierung besteht aus einem Profilstreifen, mit Vorteil aus Metall, der wendelförmig um das Innenrohr herum gewickelt ist. Der Profilstreifen wird vorzugsweise mit geringer Steigung gewickelt, die beispielsweise gleich der Profilbreite ist. Sein Profil ist so ausgeführt, daß seine Windungen entweder eng aneinander liegen oder ineinander greifen und dabei miteinander verhakt werden. In beiden Versionen ergibt sich ein rohrartiges Gebilde. Eine solche auch als Karkasse bezeichnete Armierung ist beispielsweise als Kabelschutzrohr bekannt.

Das Innenrohr dieses Leitungsrohrs ist also als rundum geschlossenes Metallrohr gegenüber dem zu transportierenden Fluid dicht, so daß es nicht zugesetzt und verschmutzt werden kann. Auch eine Diffusion aggressiver Bestandteile des Fluids nach außen ist durch das Innenrohr unterbunden. Die dasselbe umgebende erste radiale Armierung gibt dem Leitungsrohr eine hohe Querstabilität, so daß der von dem im Innenrohr bewegten Fluid erzeugte Druck sich nicht auswirken kann. Das Außenrohr ist ebenfalls ein rundum geschlossenes Metallrohr, so daß die innerhalb desselben liegenden Aufbauten gegen das Meerwasser geschützt sind. Die beiden zugfesten Stränge gewährleisten die Zugfestigkeit des Leitungsrohrs auch bei größeren Längen.

Ausführungsbeispiele des Erfindungsgegenstandes sind in den Zeichnungen dargestellt.

Es zeigen:
Fig. 1 ein Leitungsrohr nach der Erfindung teilweise im Schnitt.
Fig. 2 bis 5 ergänzte Ausführungsformen des Leitungsrohrs nach Fig. 1.

In den Zeichnungen sind der Einfachheit halber jeweils nur kurze Abschnitte des Leitungsrohrs nach der Erfindung dargestellt, aus denen die Aufbauelemente desselben hervorgehen.

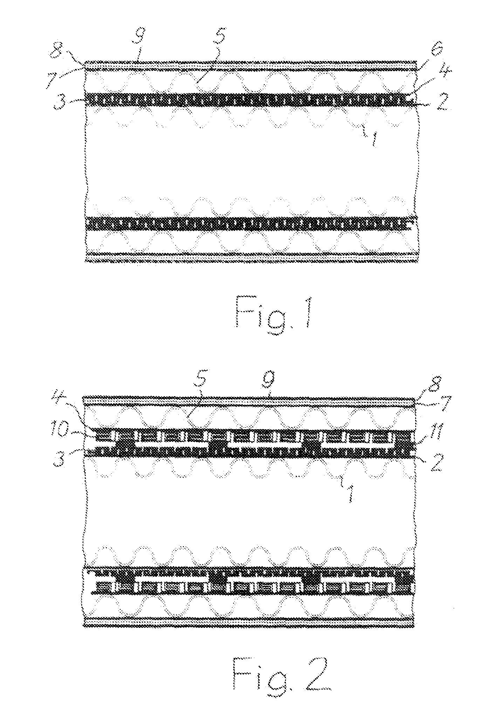

Das Leitungsrohr nach Fig. 1 hat ein Innenrohr 1, das als quer zu seiner Längsrichtung gewelltes Metallrohr ausgeführt ist. Es besteht vorzugsweise aus Edelstahl. Das Innenrohr 1 ist unter Zwischenschaltung einer Trennschicht 2 aus Isoliermaterial von einer ersten radialen Armierung 3 umgeben. Über der ersten radialen Armierung 3 liegt wieder eine Trennschicht 4 aus Isoliermaterial, an welcher als Außenrohr 5 ein quer zu seiner Längsrichtung gewelltes Metallrohr anliegt. Das Außenrohr 5 ist unter Zwischenschaltung einer isolierenden Schicht 6 von zwei, der axialen Stabilisierung des Leitungsrohrs dienenden Lagen aus zugfesten Strängen 7 und 8 umgeben, die mit Vorteil aus Metall, insbesondere aus Stahl, oder aus Aramid bestehen. Über dem Strang 8 der äußeren Lage ist eine Schicht 9 aus Isoliermaterial angebracht. Zwischen den beiden Strängen 7 und 8 liegt mit Vorteil eine aus Isoliermaterial bestehende Trennschicht. Die beiden Stränge 7 und 8 sind vorzugsweise mit gegenläufiger Schlagrichtung um ihre jeweilige Unterlage herumgewickelt. Es können auch mehr als zwei zugfeste Stränge über dem Außenrohr 5 aufgebracht sein.

Zur weiteren radialen Stabilisierung sowie zur Verbesserung der thermischen Isoliereigenschaft des Leitungsrohrs kann gemäß Fig. 2 um die erste radiale Armierung 3 herum, konzentrisch zu derselben eine zweite radiale Armierung 10 angebracht sein, die von der ersten radialen Armierung 3 durch eine nur schematisch angedeutete Abstandshalterung 11 getrennt ist.

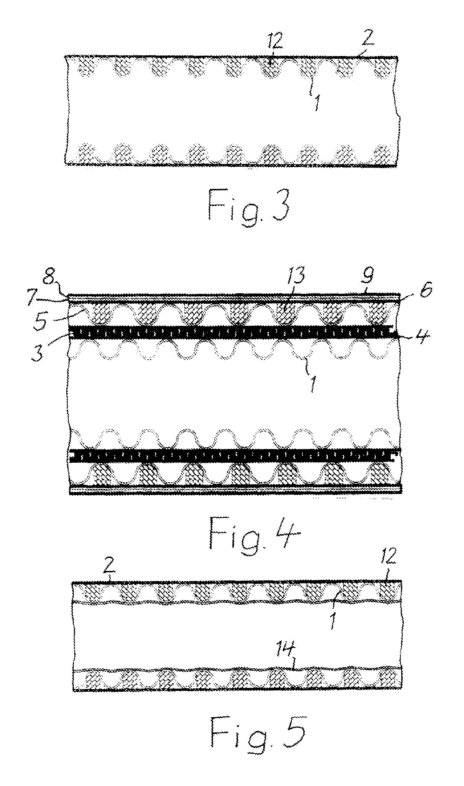

Gemäß Fig. 3 kann das Innenrohr 1 zusätzlich durch einen Profilkörper 12 abgestützt sein, der an der aus Isoliermaterial bestehenden Schicht 2 anliegt und in die Wellentäler des Innenrohrs 1 mit Anlage an demselben hineinragt. Der Profilkörper 12 besteht mit Vorteil aus einem druck- und zugfesten Material, wie einem faserverstärkten Kunststoff oder Metall. Er soll gegenüber dem metallischen Innenrohr 1 gute Gleiteigenschaften haben. Bei einem wendelförmig gewellten Innenrohr 1 wird nur ein Profilkörper 12 eingesetzt, der dann als Wendel ausgeführt ist. Bei einem ringförmig gewellten Innenrohr 1 ist für jedes Wellental desselben ein einzelner Profilkörper erforderlich, so daß der Profilkörper 12 dann aus einer Vielzahl von Profilkörpern besteht. Bei dieser Ausführungsform des Leitungsrohrs kann es zweckmäßig sein, wenn beispielsweise nur in jedem zweiten oder dritten Wellental ein solcher Profilkörper angeordnet wird.

Entsprechend der Ausführungsform des Leitungsrohrs nach Fig. 4 kann auch das Außenrohr 5 zusätzlich durch einen Profilkörper 13 abgestützt sein, der in gleicher Weise wie der Profilkörper 12 ausgeführt sein kann. Er liegt an der Schicht 6 aus Isoliermaterial an und ragt in die Wellentäler des Außenrohrs 5 unter Anlage an demselben hinein.

Im Innenrohr 1 kann gemäß Fig. 5 auch ein dasselbe auskleidender Schlauch 14 aus Isoliermaterial angeordnet sein, der auch als "Liner" bezeichnet wird. Zum Druckausgleich mit dem zwischen Innenrohr 1 und Schlauch 14 liegenden Hohlraum kann der Schlauch 14 auf seiner ganzen Länge durch Anbringung von Löchern perforiert sein.

## Patentansprüche

1. Leitungsrohr zum Unterwasser-Transport eines Fluids, welches ein das Fluid führendes, druckfestes metallisches Innenrohr aufweist, um das herum zu seiner Stabilisierung in radialer Richtung mindestens ein profilierter, metallischer Strang und zur Stabilisierung in axialer Richtung mindestens ein zugfester Strang herumgewickelt sind, wobei zwischen den einzelnen Lagen aus metallischen Elementen jeweils eine Zwischenschicht aus Isoliermaterial angebracht ist, **dadurch gekennzeichnet,**
- **daß** das Innenrohr (1) ein quer zu seiner Längsrichtung gewelltes Metallrohr ist,
- **daß** das Innenrohr (1) zur Stabilisierung in radialer Richtung von mindestens einer ersten radialen Armierung (3) umgeben ist, die aus einem profilierten, wendelförmig verlaufenden Profilstreifen besteht, dessen Windungen eng aneinander liegen oder ineinander greifen und miteinander verhakt sind,
- **daß** um die erste radiale Armierung (3) herum ein quer zu seiner Längsrichtung gewelltes Metallrohr als Außenrohr (5) angebracht ist und
- **daß** um das Außenrohr (5) mindestens zwei Lagen aus zugfesten Strängen (7,8) herumgewickelt sind, vorzugsweise mit entgegengesetzter Schlagrichtung.

2. Leitungsrohr nach Anspruch 1, **dadurch gekennzeichnet, daß** die erste radiale Armierung (3) unter Zwischenschaltung einer Abstandshalterung (11) von einer zweiten radialen Armierung (10) umgeben ist.

3. Leitungsrohr nach Anspruch 1 oder 2, **dadurch gekennzeichnet, daß** in dem Innenrohr (1) ein dasselbe auskleidender Schlauch (14) aus Isoliermaterial angebracht ist.

4. Leitungsrohr nach Anspruch 3, **dadurch gekennzeichnet, daß** der Schlauch (14) auf seiner ganzen Länge perforiert ist.

5. Leitungsrohr nach Anspruch 1, **dadurch gekennzeichnet, daß** die zugfesten Stränge (7,8) zwischen Schichten aus Isoliermaterial eingebettet sind.

6. Leitungsrohr nach Anspruch 1, **dadurch gekennzeichnet, daß** von außen in die Wellung von Innenrohr (1) und/oder Außenrohr (5) eingreifende, der Abstützung dienende Profilkörper (12,13) vorhanden sind.

## Claims

1. A pipeline for the underwater transport of a fluid which has a pressure-tight metal inner pipe for conducting the fluid, around which for its mechanical stabilization in radial direction at least one profiled metal strand and for its stabilization in axial direction at least one tension-proof strand are wound, wherein an intermediate layer of insulating material is placed respectively between the individual layers of metal elements, **characterized in**
- **that** the inner pipe (1) is a metal pipe which is corrugated transversely to its longitudinal direction,
- **that** the inner pipe (1) is surrounded by at least one first radial reinforcement (3) for stabilization in the radial direction, which consists of a profiled helically extending strip whose windings are placed close to each other or engaging each other and are hooked together,
- **that** a metal pipe which is corrugated traversely to its longitudinal direction is arranged as an outer pipe (5) around the radial reinforcement (3), and
- **that** at least two layers of tension proof strands (7,8) are wound around the outer pipe (5), preferably with an opposite direction of lay.

2. A pipeline according to claim 1, **characterized in that** the first radial reinforcement (3) is surrounded by a second radial reinforcement (10) with an intermediate spacer arrangement (11) between both.

3. A pipeline according to claim 1 or 2, **characterized in that** a tube (14) of insulating material is placed within the inner pipe (1) as a lining of the same.

4. A pipeline according to claim 3, **characterized in that** the tube (14) is perforated on its entire length.

5. A pipeline according to claim 1, **characterized in that** the tension proof strands (7,8) are embedded between layers of insulating material.

6. A pipeline according to claim 1, **characterized in that** profiled bodies (12,13) are provided which penetrate from the outside into the corrugation of the inner pipe (1) and/or the outer pipe (5).

## Revendications

1. Conduite pour le transport sous-marin d'un fluide, qui présente un tube interne métallique résistant à la pression et guidant le fluide, autour duquel sont enroulés, en vue de sa stabilisation dans la direction radiale, au moins un toron métallique profilé et en vue de sa stabilisation dans la direction axiale, au moins un toron résistant à la traction, une couche intermédiaire en matériau isolant étant incorporée entre les couches individuelles d'éléments métalliques,
**caractérisée en ce que**
- le tube interne (1) est un tube métallique ondulé transversalement à sa direction longitudinale,
- le tube interne (1) est entouré par au moins une, première armure radiale (3) en vue de sa stabilisation dans la direction radiale, laquelle armure est constituée d'une bande profilée s'étendant sous forme ondulée, dont les enroulements sont situés étroitement les uns à côté des autres ou s'engagent les uns dans les autres et sont accrochés les uns aux autres,
- un tube métallique ondulé transversalement à sa direction longitudinale est appliqué en tant que tube externe (5) autour de la première armure radiale (3) et
- au moins deux couches de torons résistants à la traction (7, 8) sont enroulées autour du tube externe (5), de préférence avec un sens de câblage opposé.

2. Conduite selon la revendication 1, **caractérisée en ce que** la première armure radiale (3) est entourée par une deuxième armure radiale (10) en interposant un système d'espacement (11).

3. Conduite selon la revendication 1 ou 2, **caractérisée en ce qu'**un tuyau (14) en matériau isolant est appliqué dans le tube interne (1) en revêtant celui-ci.

4. Conduite selon la revendication 3, **caractérisée en ce que** le tuyau (14) est perforé sur toute sa longueur.

5. Conduite selon la revendication 1, **caractérisée en ce que** les torons résistants à la traction (7, 8) sont noyés entre des couches de matériau isolant.

6. Conduite selon la revendication 1, **caractérisée en ce que** des corps profilés (12, 13) servant au support sont prévus, lesquels s'engagent depuis l'extérieur dans l'ondulation du tube interne (1) et/ou du tube externe (5).
